# EUROPEAN PATENT APPLICATION

(11) **EP 1 686 291 A2**
(43) Date of publication of application: **02.08.2006**
(21) Application number: 06001989.0
(22) Date of filing: 31.01.2006
(51) Int. Cl.: F16H 61/00, F16D 25/12

(54) **Control method and device for a gear transmission**

(30) Priority: 31.01.2005 JP 2005022627
(71) Applicant: HITACHI, LTD., Chiyoda-ku Tokyo 100-8280 (JP)
(72) Inventor: Ochi, Tatsuya, Chiyoda-ku Tokyo 100-8220 (JP); Minowa, Toshimichi, Chiyoda-ku Tokyo 100-8220 (JP); Okada, Takashi, Chiyoda-ku Tokyo 100-8220 (JP); Sakamoto, Hiroshi, Chiyoda-ku Tokyo 100-8220 (JP); Matsumura, Tetsuo, Chiyoda-ku Tokyo 100-8220 (JP)
(74) Representative: Beetz & Partner

(57) **Abstract**

A control device (100) and a control method for a gear transmission (2), in which a first flow rate computation section (11) calculates a coolant flow rate which places importance on action for cooling friction clutches (3A,3B). A second flow rate computation section (10) calculates a coolant flow rate which places importance an inhibition of drag in the friction clutches (3A,3B). A flow rate computation switching section (12) switches the first flow rate computation section (11) and the second flow rate computation section (10). Coolant flow controller (9,30) controls a coolant flow rate based on the output of the first or second flow rate computation section (11,10).

## Description

### FIELD OF THE INVENTION

The present invention relates to a control device and a control method of a gear transmission, particularly relates to a control device and a control method of a gear transmission favorable to be used for a gear transmission provided with at least one friction clutch.

### BACKGROUND OF THE INVENTION

Recently, an automated gear transmission is suggested from a viewpoint of low fuel consumption of an automobile. The automatic transmission is provided with a positive clutch having plural gear trains with idle gears and synchromeshes provided to parallel two shafts. The synchromeshes for executing shift operation by automatically switching the positive clutch by an actuator (for example, refer to a patent document 1 (JP-A No. 320054/1996)). As described above, as the transmission has simple structure using the positive clutch having high mechanical efficiency, it can contribute to the enhancement of fuel economy.

In such a transmission, a friction clutch and a complex gear mechanism respectively operated inside a transmission case in which components are compactly arranged. They generate a large quantity of heat due to drag to smoothly transmit torque in a start or shift operation. The accumulation of heat is deteriorated by the essence of a clutch mechanism itself. Particularly, in a twin-clutch transmission in which these two clutches are fitted, as a large quantity of heat is generated, a cooling method for the clutches is a large theme.

The following method for cooling a clutch unit is known. The method is comprised of the steps: calculating the quantity of heat generated by the clutch based on engine torque and difference in revolution speed every engaged/disengaged clutch at time of a gear shift; estimating the rise of the temperature of the clutch factoring in cooling effect by a coolant flow rate currently supplied, calculating a flow rate required for cooling the clutch based on the above-mentioned calculating and estimating; and thereby supplying an efficient required coolant flow rate every engaged/disengaged clutch. The method can inhibit the deterioration of efficiency due to the excessive supply of a flow rate (for example, refer to a patent document 2 (JP-A No. 144304/2004)).

However, in the above-mentioned method, when an engine is stopped or started in a situation that a large quantity of coolant is supplied to the high-temperature clutch, the following problems may occur.

That is, when a large quantity of heat is generated by the friction clutch, a large quantity of coolant flow rate is supplied to the clutch. Therefore, as drag in the clutch increases and acts as a load when the engine is stopped, engine speed is deteriorated, compared with that in an initial state and time passing a resonant frequency band with the body of a vehicle is extended. As a result, the vibration of the body may be caused and the drivability may be deteriorated.

Besides, when a large quantity of heat is generated by the friction clutch, a large quantity of coolant flow rate is supplied to the clutch. Therefore, as drag in the clutch increases and acts as a load when the engine is started, time required until engine speed rises up to idle speed is extended. Thereby, the vehicle startability may be deteriorated.

Such problems where the drivability is deteriorated when the engine is stopped/started, become manifest in an idle stop system being recently popularized. The idle stop system is a recently popularized system in view of the enhancement of fuel economy. The system is configured so that when a vehicle is stopped because of a red signal or congestion, an engine is automatically stopped. And when a predetermined condition is met afterward (for example, when a driver or a rider performs operation since his/her leg is detached from a brake pedal until it steps on an accelerator pedal), the engine is automatically started again. As described above, as the engine is automatically stopped or started independent of the intention of the driver or the rider, the operation free of a sense of incompatibility and the drivability are regarded as important.

### SUMMARY OF THE INVENTION

The object of the invention is to provide a control device and a control method of a gear transmission wherein the deterioration of drivability caused by the increase of a flow rate for cooling a friction clutch can be avoided.

The object is solved according to the features of the independent claims. The dependent claims relate to further advantageous embodiments of the invention.
(1) The invention is basically configured as follows.
   A control device of the present invention may be applied for a gear transmission for changing shift ratio by the engagement/disengagement of at least one friction clutch coupled to an engine. The control device may control the flow rate of a coolant supplied to the friction clutch by operating a coolant flow controller. The coolant is for cooling or lubricating the friction clutch. The control device comprises: a first flow rate computation section for calculating a coolant flow rate which places importance on a cooling action for the friction clutch; a second flow rate computation section for calculating a coolant flow rate which places importance on an inhibition of drag in the friction clutch; and/or a flow rate computation switching section for switching the first flow rate computation section and the second flow rate computation section. Owing to such a configuration, it is possible to avoid the deterioration of drivability caused by the increase of the coolant flow rate for the friction clutch.
(2) In the control device of the gear transmission disclosed in (1), it is configured desirably so that the first flow rate computation section calculates the coolant flow rate based on a temperature parameter such as the quantity of heat caused in the friction clutch.
(3) In the control device of the gear transmission disclosed in (1), it is configured desirably so that the flow rate computation switching section switches to the second flow rate computation section when an engine stop request is made.
(4) In the control device of the gear transmission disclosed in (1), it is configured desirably so that the flow rate computation switching section switches to the second flow rate computation section when an engine start request is made.
(5) In the control device of the gear transmission disclosed in (1), it is configured desirably so that the flow rate computation switching section switches to the second flow rate computation section when a shift request of the gear transmission is made.
(6) In the control device of the gear transmission disclosed in (1), it is configured desirably so that the gear transmission is a twin-clutch system provided with two friction clutches, and the flow rate computation switching section switches from the first flow rate computation section to the second flow rate computation section prior to shift operation of the gear transmission.
(7) Besides, to achieve the object, the invention is configured as follows.
   A control device is applied for a gear transmission. The transmission is provided with one or more friction clutches for changing shift ratio by the engagement/disengagement of the friction clutch. The control device is comprised of: a first flow rate computation section for calculating a coolant flow rate which places importance on a cooling action for the friction clutch; a second flow rate computation section for calculating a less coolant flow rate than a flow rate calculated by the first flow rate computation section; and/or a coolant flow controller for controlling a coolant supplied to the friction clutch based on a coolant flow rate calculated by either the first flow rate computation section or the second flow rate computation section.
   Owing to such a configuration, it is possible to avoid the deterioration of drivability caused by the increase of the coolant flow rate for the friction clutch
(8) To achieve the obj ect, the invention is also basically configured as follows.
   A control device may be applied to a gear transmission. The transmission may be provided with one or more friction clutches for changing shift ratio by the engagement/disengagement of the friction clutch. The control device may have a switching section for switching from a first coolant flow rate which places importance on action for cooling the friction clutch to a second coolant flow rate which places importance on an inhibition of drag. Thereby the coolant flow rate supplied to the friction clutch can be changed.
   Owing to such configuration, it is possible to obtain a similar effect as the above-mentioned effect.
(9) To achieve the object, the invention is also basically configured as follows.
   A control system of a vehicle comprises an engine for a vehicle, a gear transmission for changing shift ratio by the engagement/disengagement of at least one friction clutch, and/or coolant flow controller for controlling a coolant flow rate for cooling or lubricating the friction clutch. The engine can be automatically turned into a driven state and into a stopped state based on a predetermined condition. The system further comprises: a flow rate determining section for determining the coolant flow rate; and/or a control section for prohibiting the automatic stop of the engine based on the result of determination by the coolant flow rate determining section when the coolant flow rate is small.
   Owing to such configuration, it is possible to obtain a similar effect as the above-mentioned effect.
(10) To achieve the object, the invention is also basically configured as follows.

A control method is applied to a similar gear transmission with the above-mentioned gear transmission. The method comprising steps of: when required, switching from a first coolant flow rate which places importance on action for cooling the friction clutch to a second coolant flow rate which places importance on an inhibition of drag, and thereby changing a coolant flow rate supplied to the friction clutch.

Owing to such configuration, it is possible to obtain a similar effect as the above-mentioned effect.

The above features can be combined in any way partly or as a whole.

### BRIEF DESCRIPTION OF THE DRAWINGS

FIG. 1 is a block diagram showing the configuration of a main part of a control device for a gear transmission using a friction clutch of a first embodiment of the invention;
FIG. 2 is a system diagram showing a supply system of a friction clutch coolant flow rate according to the first embodiment of the invention;
FIG. 3 is a schematic diagram showing the configuration of the gear transmission of the first embodiment;
FIG. 4 is a flowchart showing a main part of the operation of the control device of the first embodiment;
FIGS. 5A, 5B, 5C and 5D are time charts showing the operation of the control device equivalent to the first embodiment of the invention;
FIG. 6 is a schematic diagram showing the configuration of a gear transmission of the second embodiment of the invention;
FIG. 7 is a flowchart showing control operation by a control device of the gear transmission of the second embodiment of the invention;
FIGS. 8A, 8B, 8C, 8D and 8E are time charts showing power-off shift operation from 4th-speed to 3rd-speed in a conventional type method;
FIGS. 9A, 9B, 9C, 9D and 9E are time charts showing power-off shift operation from 4th-speed to 3rd-speed by the control device of the second embodiment of the invention;
FIG. 10 shows a release load characteristic of a dry single disc clutch used for an input clutch of a gear transmission of a third embodiment of the invention;
FIG. 11 is a flowchart showing a main part of control operation by a control device of the gear transmission of the third embodiment of the invention;
FIGS. 12A, 12B, 12C, 12D and 12E are time charts showing the main part of the control operation by the control device of the gear transmission of the third embodiment;
FIG. 13 is a flowchart showing control operation by a control device of a gear transmission equivalent to a fourth embodiment;
FIGS. 14A, 14B, 14C, 14D and 14E are time charts showing a main part of the control operation by the control device of the gear transmission of the fourth embodiment of the invention;
FIG. 15 is a system block diagram showing the configuration of an idle stop system equivalent to a fifth embodiment; and
FIG. 16 is a logic diagram showing control operation over the idle stop system equivalent to the fifth embodiment.

### DETAILED DESCRIPTION OF THE PREFERRED EMBODIMENTS

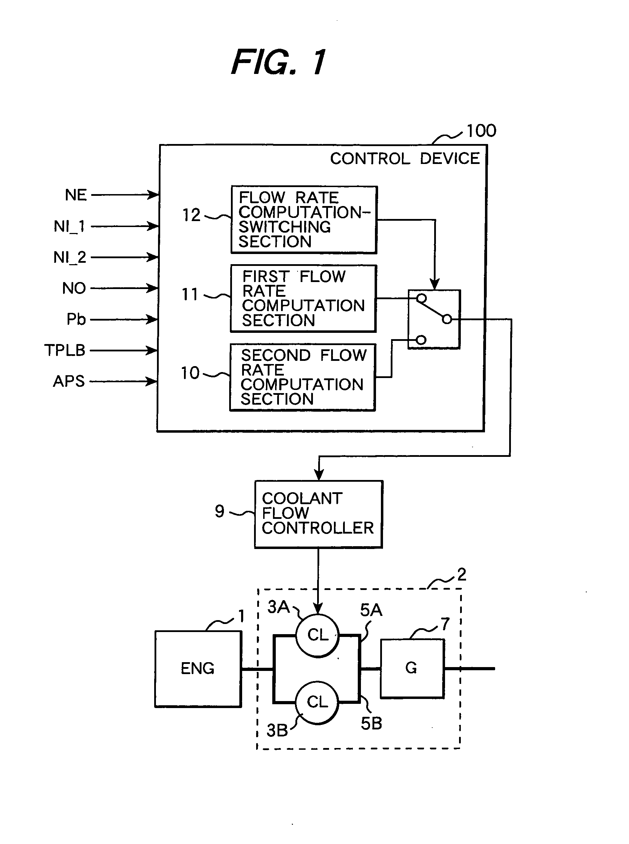

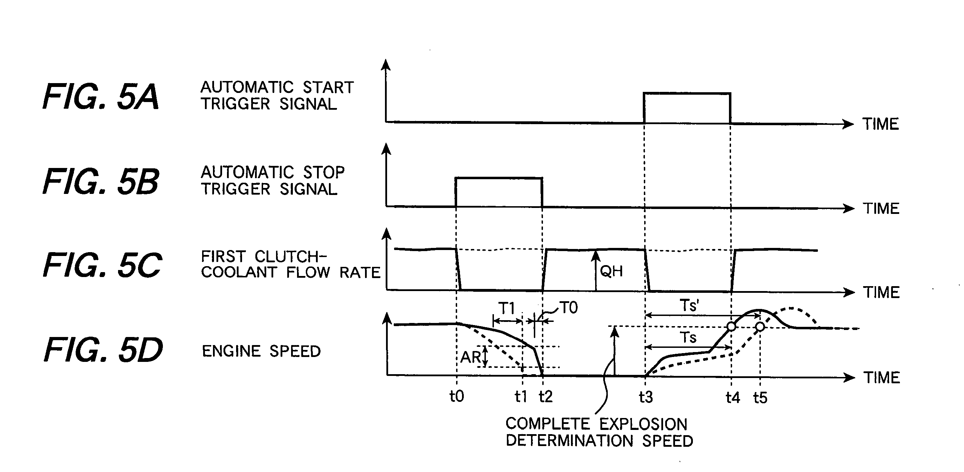

Referring to FIGS. 1 to 5A, 5B, 5C and 5D, a control system and a control method for a gear transmission as to a first embodiment of the invention will be described below.

First, referring to FIG. 1, the configuration of a main part of the control system for the gear transmission using a friction clutch according to this embodiment will be described.

FIG. 1 is a block diagram showing the main part of the control system for the gear transmission using the friction clutch according to the first embodiment.

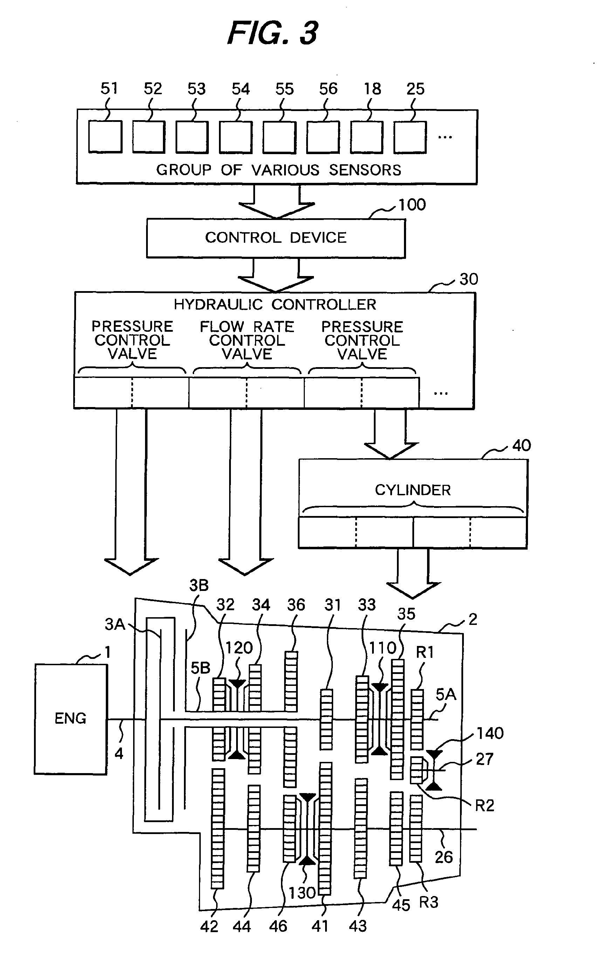

For an engine 1 which is a power source of a vehicle, an internal combustion engine such as a gasoline engine, a diesel engine and an LPG engine is used. The gear transmission 2 is arranged on a power transmission path of the engine 1. The gear transmission 2 is composed of a first clutch 3A, a second clutch 3B, a first input shaft 5A and a second input shaft 5B coupled to each clutch, and gear trains 7 disposed on those shafts. The details of the gear transmission 2 will be described later referring to FIG. 3.

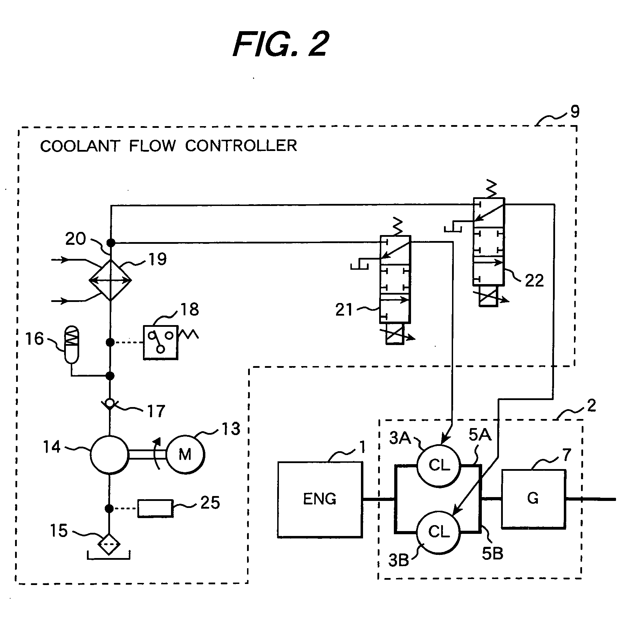

In the first clutch 3A and the second clutch 3B, much quantity of heat is generated by the repetition of frequent engagement/disengagement operated at vehicle-start and gear change for a vehicle. Then, in this embodiment, cooling oil as liquid coolant for protecting the clutch is supplied to the clutch 3A and the clutch 3B by coolant flow controller 9 so as to inhibit heat generation. The coolant flow controller 9 is composed of a pump, an oil pressure control valve, and the like, which are to be described later in FIG. 2. The coolant flow controller 9 controls cooling oil to be a predetermined flow rate and supplies the controlled cooling oil to the first clutch 3A and the second clutch 3B.

The supply of an excessive amount of cooling oil to the clutch has an adverse effect such as the deterioration of the efficiency caused due to the increase of drag together with a cooling action to the clutch.

Then, the control device 100 calculates a coolant (cooling oil) flow rate suitable for cooling or lubrication in each clutch based on input information from various sensors (engine speed NE, the number of revolutions NI_1 of the first clutch input shaft, the number of revolutions NI_2 of the second clutch input shaft, the number of revolutions NO of a transmission output shaft, information Pb from an oil pressure switch, the oil temperature TPLB of the cooling oil and an accelerator angle APS) and outputs an electric control signal to the coolant flow-controller 9.

The control device 100 comprises first and second flow rate computation sections 10, 11 for performing computation of a flow rate of cooling oil to be supplied to each clutch. The first flow rate computation section 10 calculates a flow rate of cooling oil required when cooling action to the clutch is allowed to take precedence and a large quantity of flow rate is supplied. For its one example, the first flow rate computation section calculates a flow rate required for cooling based on a temperature parameter such as the quantity of heat produced in the first clutch 3A or the second clutch 3B. In the meantime, the second flow rate computation section 11 is used when the inhibition of drag in the clutch is allowed to take precedence. The second flow rate computation section 11 calculates a small quantity of flow rate independently of a temperature parameter such as the quantity of heat produced in the clutch. Either of these two results of calculation is selected according to a running condition of the vehicle by flow rate computation switching section 12. The selected flow rate calculation result is output as an electric control signal to the coolant flow-controller 9.

The flow rate computation sections serves as the main part of the control device 100. The deterioration of drivability, which is caused due to the increase of a cooling oil flow rate for the clutch, can be avoided by switching the flow rate computation sections according to the running condition as described above.

Next, referring to FIG. 2, a coolant supply system for cooling the friction clutches according to this embodiment will be described.

FIG. 2 is a system diagram showing the coolant supply system for cooling the friction clutches according to the first embodiment of the invention. The same reference numerals as that shown in FIG. 1 show the same part.

A pump 14 is driven by a motor 13, thereby a coolant (cooling oil) in an oil pan is sucked up via a strainer 15, and pressure is raised. The pressure-raised cooling oil is temporarily accumulated by an accumulator 16 and its accumulated oil pressure Pb is detected by an oil pressure sensor 18. The control device 100 shown in FIG. 1 switches the drive/stop condition of the motor 13 so that the output of the oil pressure sensor 18 is in a predetermined range.

An oil cooler 19 is connected to the accumulator 16 in series. The oil cooler 19 cools cooling oil by coolant circulating between the oil cooler 19 and a radiator in an engine room not shown. The above-mentioned components act as an oil pressure source (cooling oil supply source) of a clutch cooling system.

Further, a main oil path 20 is branched into two systems, and flow control valves 21, 22 are arranged in the respective oil paths of the two systems. Each of those flow rate control valves 21, 22 has a linear solenoid (not shown) inside thereof. The area of an opening of each control valve 21, 22, namely the area of an opening of each oil path is controlled by driving the linear solenoid with an electric control signal from the control device 100. Thereby each output flow rate in the oil path is controlled. The coolant flow-controller 9 is configured by such an arrangement.

Cooling oil flow rates in the oil paths are respectively controlled by the flow control valves 21 and 22, and the controlled cooling oils are supplied to the first clutch 3A and the second clutch 3B via oil paths 23, 24. A temperature sensor 25 is attached to the oil pan. Oil temperature TPLB sensed by the temperature sensor 25 is not only used as a parameter for calculating a flow rate of cooling oil in the control device 100 but can be used for determining whether the cooling oil supply system normally works or not.

The above-mentioned each component configuring the coolant supply system for cooling the friction clutch does not limit a concept of the invention. It may be also a mechanical pump coupled to an output shaft of the engine as an oil pressure source for producing oil pressure by the drive of the engine. A location where the oil cooler is installed and a location where the temperature sensor is arranged are not limited, and the oil cooler and the temperature sensor can be arranged in arbitrary locations in which a function for cooling the clutch and a temperature sensing function are met.

Next, referring to FIG. 3, the configuration of the gear transmission 2 according to this embodiment will be described.

FIG. 3 is a schematic diagram showing the configuration of the gear transmission according to the first embodiment of the invention. The same reference numerals as that shown in FIG. 1 shows the same parts.

The gear transmission shown in FIG. 3 is a so-called twin-clutch transmission and is composed of the first clutch 3A for connecting/disconnecting the first input shaft 5A and the engine output shaft 4, and the second clutch 3B for connecting/disconnecting the second input shaft 5B and the engine output shaft 4.

1st speed, 3rd speed and 5th speed driving gears 31, 33 and 35 and a reverse driving gear R1 are disposed on the first input shaft 5A. The 1st speed driving gear 31 and the reverse driving gear R1 are arranged so as to integrally rotate with the first input shaft 5A. The 3rd speed and 5th speed driving gears 33, 35 are idle gears, which are arranged so as to be capable of rotating freely on the first input shaft 5A. The second input shaft 5B is coaxially provided outside the first input shaft 5A.

2nd speed, 4th speed and 6th speed driving gears 32, 34, 36 are disposed on the second input shaft 5B. The 6th speed driving gear 36 is arranged so as to rotate integrally with the second input shaft 5B. The 2nd speed and 4th speed driving gears 32, 34 are idle gears, which are arranged so as to be capable of rotating freely on the second input shaft 5B.

An output shaft 26 and a countershaft 27 are provided in parallel with the first and second input shafts 5A, 5B. 1st to 6th speed driven gears 41, 42, 43, 44, 45, 46 and a 3rd reverse gear R3 are disposed on the output shaft 26. The 2nd speed, 3rd speed, 4th speed and 5th speed driven gears 42, 43, 44, 45 and the 3rd reverse gear R3 are arranged so as to rotate integrally with the output shaft 26. The 1st speed and 6th speed driven gears 41, 46 are idle gears, which are arranged so as to be capable of rotating freely on the output shaft 26. A 2nd reverse gear R2 is idle gear, which is provided on the countershaft 27 so as to be capable of rotating freely on the countershaft 27.

A 3rd/5th speed synchromesh 110 is provided on the first input shaft 5A. A 2nd/4th-speed synchromesh 120 is provided on the second input shaft 5B. A 1st/6th speed synchromesh 130 is provided on the output shaft 26. A reverse synchromesh 140 is provided on the countershaft 27.

The first clutch 3A, the second clutch 3B and the plural synchromeshes 110, 120, and 130 are automatically controlled by the control device 100. Information from an engine speed sensor 51, an accelerator angle sensor 52, a first input shaft-revolution speed sensor 53, a second input shaft-revolution speed sensor 54, an output shaft-revolution speed sensor 55, a brake switch 56, the oil pressure sensor 18, the coolant temperature sensor 25 and other sensors and switches are input to the control device 100. The control device 100 operates the first clutch 3A, the second clutch 3B, the 3rd/5th speed synchromesh 110, the 2nd/4th speed synchromesh 120, the 1st/6th speed synchromesh 130 and the reverse synchromesh 140 based on those input information so as to realize an automatic gear shifting.

An electric control signal output from the control device 100 is input to a hydraulic controller 30. Plural servo solenoid valves are installed in the hydraulic controller 30, and hydraulic force or a flow rate according to a control signal is produced. The engaging/disengaging operations of the first clutch 3A and the second clutch 3B are automatically controlled by controlling the hydraulic force of the pressure control valve of the hydraulic controller 30. Besides, a cooling oil flow rates supplied to the first clutch 3A and the second clutch 3B are automatically controlled by controlling a flow rate of the flow control valve of the hydraulic controller 30. Further, the synchromeshes 110, 120, 130 and 140 are slid laterally in the drawing on each shaft, by controlling the hydraulic force of the pressure control valve of the hydraulic controller 30 and controlling the balance of oil pressure which acts on each cylinder of a shift actuator 40. Thereby, the driving gear or the driven gear and each shaft are engaged, and a torque transmission path according to a gear shift instruction is selected.

The components of the gear transmission in this embodiment are driven by the hydraulic actuator such as a solenoid and a cylinder as described above, however, for the hydraulic actuator, an electric type actuator such as a motor may be also used. Or a driving system that the first clutch 3A and the second clutch 3B may be driven by the hydraulic actuator, and the synchromeshes 110, 120, 130 may be driven by the electric type actuator may be also combined.

Next, a transmission path of power in each gear shifting state will be described. In running except a shift, both the first clutch 3A and the second clutch 3B are basically engaged, and torque is transmitted via either clutch.

### (Neutral state)

When the first clutch 3A and the second clutch 3B are disengaged, or even if engaged, when all the synchromeshes are located at a neutral position, the transmission system is in a neutral state.

### (1st speed state)

The 1st/6th speed synchromesh 130 is shifted to the right side in FIG.3 with engagement action of the first clutch 3A. Thereby the synchromesh 130 is engaged to the 1st speed driven gear 41, and engine torque is transmitted from the first clutch 3A to a final reduction gear not shown sequentially via the first input shaft 5A, the 1st speed driving gear 31, the 1st speed driven gear 41 on the output shaft 26.

### (2nd speed state)

The 2nd/4th speed synchromesh 120 is shifted to the left side in FIG. 3 with engagement action of the second clutch 3B. Thereby the synchromesh 120 is engaged to the 2nd speed driving gear 32, and engine torque is transmitted from the second clutch 3B to the final reduction gear not shown sequentially via the second input shaft 5B, the 2nd speed driving gear 32 and the 2nd speed driven gear 42 on the output shaft 26.

### (3rd speed state)

The 3rd/5th speed synchromesh 110 is shifted to the left side in FIG.3 with engagement action of the first clutch 3A. Thereby the synchromesh 110 is engaged to the 3rd speed driving gear 33, and engine torque is transmitted from the first clutch 3A to the final reduction gear not shown sequentially via the first input shaft 5A, the 3rd speed driving gear 33 and the 3rd speed driven gear 43 on the output shaft 26.

### (4th speed state)

The 2nd/4th speed synchromesh 120 is shifted to the right side in FIG.3 with engagement action of the second clutch 3B. Thereby the synchromesh 120 is engaged to the 4th speed driving gear 34, and engine torque is transmitted from the second clutch 3B to the final reduction gear not shown sequentially via the second input shaft 5B, the 4th speed driving gear 34 and the 4th speed driven gear 44 on the output shaft 26.

### (5th speed state)

The 3rd/5th speed synchromesh 110 is shifted to the right side in FIG.3 with engagement action of the first clutch 3A. Thereby the synchromesh 110 is engaged to the 5th speed driving gear 35, and engine torque is transmitted from the first clutch 3A to the final reduction gear not shown sequentially via the first input shaft 5A, the 5th speed driving gear 35 and the 5th speed driven gear 45 on the output shaft 26.

### (6th speed state)

The 1st/6th speed synchromesh 130 is shifted to the left side in FIG.3 with engagement action of the second clutch 3B. Thereby the synchromesh 130 is engaged with the sixth speed driven gear 46, and engine torque is transmitted from the second clutch 3B to the final reduction gear not shown sequentially via the second input shaft 5B, the 6th speed driving gear 36 and the 6th speed driven gear 46 on the output shaft 26.

### (Reverse state)

The reverse synchromesh 140 is shifted to the left side with engagement action of the first clutch 3A. Thereby the synchromesh 140 is engaged to the second reverse gear R2, and engine torque is transmitted from the first clutch 3A to the final reduction gear not shown sequentially via the first input shaft 5A, the first reverse gear R1, the second reverse gear R2, the third reverse gear R3 on the output shaft 26.

Next, actual shift operation will be described. The first clutch 3A and the second clutch 3B are engaged/disengaged by each synchromesh 110, 120, 130 in coordination with actuators of various gear trains, and engine torque is selectively transmitted to the output shaft 26.

For one example, in case the vehicle is started from a stationary state, engagement is made at the smallest gear ratio of the gear transmission 2, namely 1st speed gear ratio. Therefore, the 1st/6th synchromesh 130 is shifted to the right side in FIG. 3 from a neutral position, couples the 1st driven gear 41 to the output shaft 26, and the 1st clutch 3A is engaged so that torque is transmitted from the engine 1 to the output shaft 26 via a 1st speed gear train. Next, when vehicle speed is built up and the control device 100 determines that a condition for requiring an up-shift to 2nd-speed is met, firstly the 2nd/4th speed synchromesh 120 is shifted to the left side from a neutral position, and the second driving gear 32 is coupled with the second input shaft 5B. Next, as the first clutch 3A is disengaged, the second clutch 3B is engaged. Thereby, a shift free of the cutoff of torque is made.

Such engagement/disengagement changing of the first clutch 3A and the second clutch 3B is executed every shift of the gear transmission 2. Therefore, when the inactive clutch (in this case, the clutch on the engaged side) is engaged in a state before gear change, a surge in torque by an applied load is transmitted via the clutch. Therefore, heat resulting from a slide friction on the clutch is produced. If no suitable cooling is made, the temperature of the clutch on the engaged side rises up to the high temperature where a clutch plate or friction material may be damaged. In addition, when the accumulation of heat is not suitably dissipated, the accumulation of heat brings to remarkable temperature-rise of the whole gear transmission 2. Consequently, the above-mentioned damage may be actually caused. On the other hand, while the temperature of the clutch on the engaged side rapidly rises, the clutch on the disengaged side stops the transmission of torque. As the generation of heat in the disengaged clutch decreases due to a load decrease, cooling the disengaged clutch is not required.

Therefore, to make compatibility between an action for cooling the clutch and a preventing of the increase of drag resulting from the excessive supply of the coolant, it is required to supply a suitable coolant flow rate according to an exothermic state and a thermal load every clutch. Besides, in a peculiar situation that the drivability is deteriorated due to the increase of a coolant flow rate, it is required to temporarily reduce a coolant flow rate to avoid the deterioration of the drivability.

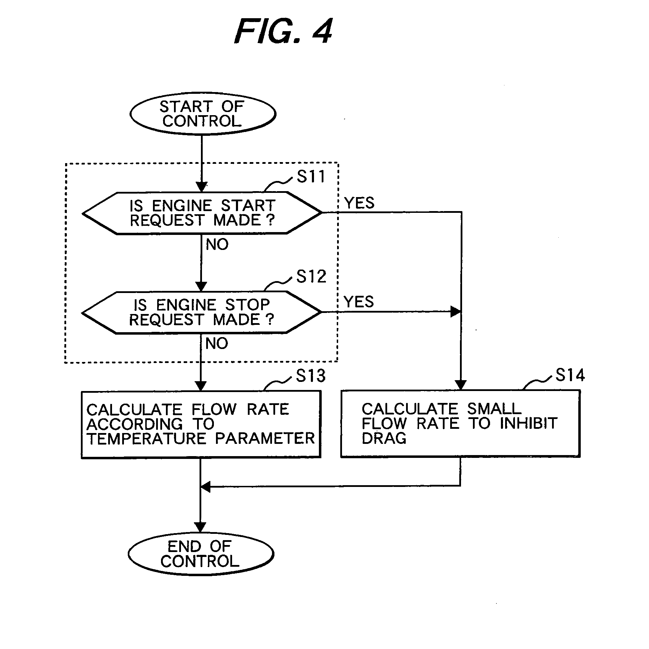

Next, referring to FIG. 4, the operation of the control device 100 of this embodiment will be described.

FIG. 4 is a flowchart showing a main part of the operation of the control device.

In a step S11 and a step S12, the flow rate computation switching section 12 determines whether a request for an engine-start from a state where the engine is stopped or a request for an engine-stop from a state where the engine is driven is made or not. When either of such requests is made, the step proceeds to a step S14. When no request is made, the step proceeds to a step S13.

When no request of either of the engine start and engine stop is made, the first flow rate computation section 11 makes cooling action precede, computes a coolant flow rate according to a temperature parameter such as the quantity of generated heat of each clutch, and positively accelerates cooling action in the step S13.

In the meantime, when being in the engine starting process or engine stopping process, the second flow rate computation section 10 makes the inhibition of drag precede with the following action. That is, the section 10 computes a small quantity (including zero) of coolant flow rate to inhibit a detrimental effect by drag independent of the quantity of generated heat of the clutch and a temperature parameter in the step S14. Thus, a series of operation is completed.

A request for starting the engine and a request for stopping the engine are not only made in response to the operation of a key by a driver or a rider but may be also automatically made by an idle stop system independent of the operation by the driver or the rider.

As described above, the increase of clutch coolant flow rate during the engine starting process or the engine stopping process, causes the deterioration of the drivability. However the control device 100 of this embodiment is capable of avoiding such a problem by controlling the coolant flow rate.

Next, referring to FIGS. 5A to 5D, the operation of the control device 100 of this embodiment will be described.

FIGS. 5A to 5D are time charts showing the operation of the control device of the first embodiment of the invention. FIG. 5A shows an automatic start trigger signal and FIG. 5B shows an automatic stop trigger signal. FIG. 5C shows the coolant flow rate of the first clutch, and FIG. 5D shows engine speed (engine revolution).

In FIGS. 5A to 5D, time charts in an idle stop of a vehicle are shown. The time charts show the following contents: that is, when an idle stop condition is met at time t0, the engine becomes automatically an engine stop mode, afterward, when a restart condition is met at time t3, the engine becomes automatically an engine start mode. Waveforms shown by broken lines in FIGS 5C to 5D are operations executed by a conventional type control method. Waveforms shown by solid lines in FIGS. 5A to 5D are operations by the control method of this embodiment.

As for the first clutch-coolant flow rate before the time t0 at which an automatic stop trigger is issued, a large quantity of flow rate QH is supplied as shown in FIG. 5C, and the first flow rate computation section 11 calculates the coolant flow rate depending on a temperature parameter such as a thermal load of the first clutch 3A.

When the automatic stop trigger is issued at the time t0, the first clutch-coolant flow rate is reduced up to zero as shown by the solid line in FIG. 5C. That is, the second flow rate computation section 10 calculates a small quantity (including zero) of the coolant flow rate and it is supplied. Therefore, as the drag of the clutch in a process where the engine is stopped is reduced, the rapid decrease of engine speed is inhibited as shown by the solid line in FIG. 5D.

When a large quantity of heat is caused by the friction clutch during the engine stop process, if a large quantity of coolant is supplied to the clutch as shown by the broken lines in FIG. 5C, the drag increases in the clutch. The drag acts as a load. As a result, as engine speed rapidly decreases from initial stage of the engine stop as shown by the broken lines in FIG. 5D, time T1 when the waveform passes a resonant frequency band AR with the body of the vehicle is extended. Therefore, the vibration of the body is caused and the drivability is deteriorated.

On the other hand, in this embodiment, as the drag of the clutch is reduced, the engine speed gently decreases at an initial stage of the engine stop as shown by the solid line in FIG. 5D when the engine stop trigger signal is issued at the time t0 . Subsequent to that, the engine speed is reduced up to a vicinity of the resonant frequency band AR in FIG. 5D. In this stage, an engine control system can control the quantity of fuel, ignition timing and a throttle position so that the engine speed rapidly decreases. Thereby, time T0 when the waveform passes the resonant frequency band AR can be reduced, the vibration of the body is also reduced, and the drivability can be improved. That is, the vibration of the body caused by the rapid variation of engine speed during the engine stop process and the vibration of the body caused by the passage of the resonance frequency band are inhibited.

Next, when it is determined that the engine is stopped at time t2, a flow rate calculating method is switched again and as shown in FIG. 5C, the first clutch-coolant flow rate is increased up to the original value QH, and a flow rate for accelerating the cooling of the clutch is supplied.

Next, when an automatic start trigger is issued at time t3 as shown in FIG. 5A, the first clutch-coolant flow rate decreases up to zero as shown by the solid line in FIG. 5C same as during the engine stop process. Therefore, according to this embodiment, as the drag of the clutch during the engine start process is reduced, the time Ts from the start trigger-issue until the engine complete explosion, can be reduced as shown by the solid line in FIG. 5D and the engine speed promptly increases.

On the other hand, in a conventional type method, when a large quantity of heat is caused by friction during the engine start process, a large quantity of clutch coolant is supplied as shown by the broken line in FIG. 5C. Therefore, as drag increases in the clutch and the drag acts as a load, required time Ts' until engine speed increases up to idle speed is extended. That is, the engine startability is deteriorated.

In FIGS. 5A to 5D, the coolant flow rate is reduced at the same time as issue of the stop trigger signal or the start trigger signal. But, as the flow rate actually supplied to the clutch has a delay in its response, a drag increase may continue immediately after the trigger signal is issued. Then, an engine control system may perform the following control method. That is, after predetermined time elapses from the trigger signal-issue, the engine control system may control fuel injection quantity and ignition timing or a starter so that actual engine stop process or engine start process starts.

In FIG. 5C, the first clutch-coolant flow rate is temporarily reduced to zero, however, a control method of supplying the coolant flow rate equal to or smaller than a predetermined value in which no detrimental effect is caused due to drag may be also adopted.

Furthermore the following control method may be adopted:
indirectly calculating a load giving the drag of the clutch based on the temporal variation of engine speed during the engine stop process or the engine start process; and switching the coolant flow rate computation when its calculated value is smaller than a preset value and thereby temporarily reducing a flow rate.

As described above, according to this embodiment, it makes possible to avoid the drivability-deterioration caused by the increase of a clutch-coolant flow rate, during the engine stop process or the engine start process.

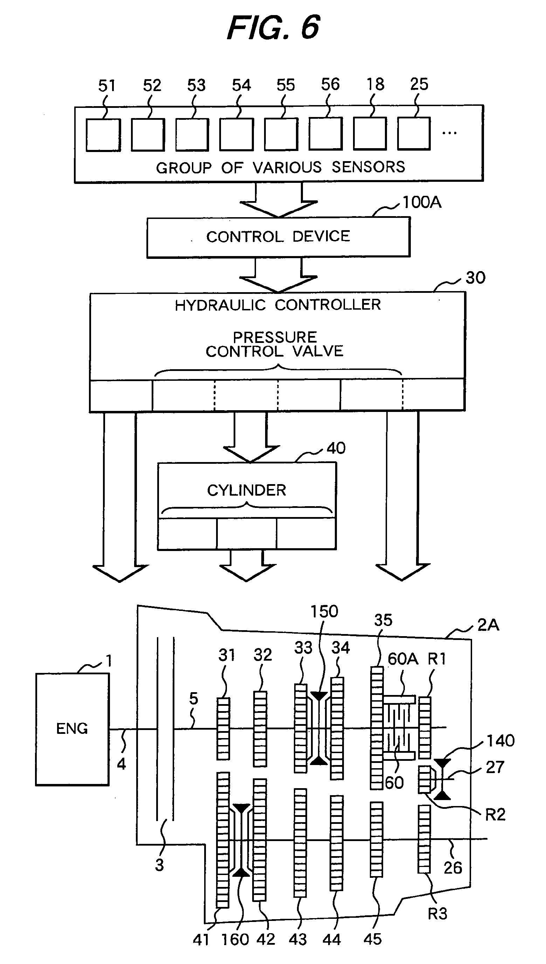

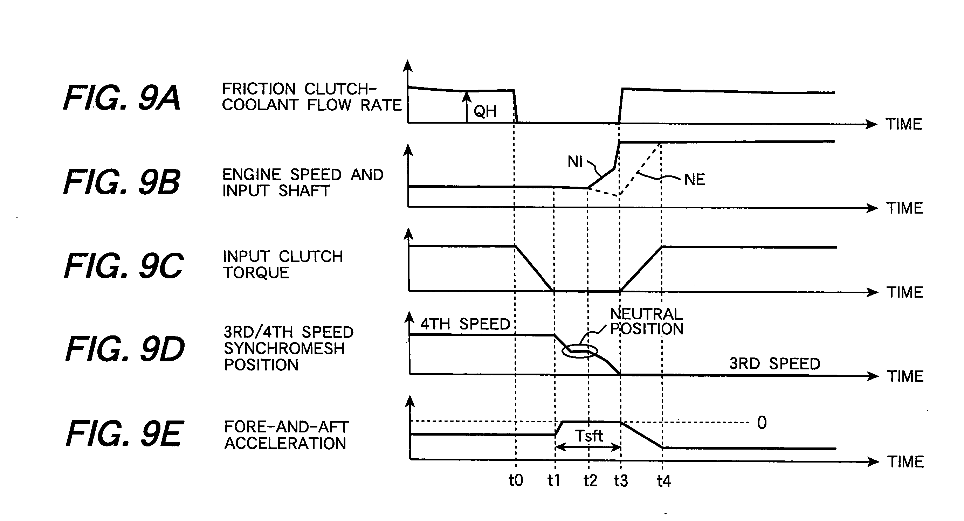

Next, referring to FIGS. 6 to 9A, 9B, 9C, 9D and 9E, a control device and a control method of a second embodiment of the invention for a gear transmission will be described.

First, referring to FIG. 6, the configuration of the gear transmission of this embodiment will be described.

FIG. 6 is a schematic diagram showing the configuration of the gear transmission of the second embodiment.

The gear transmission 2A in FIG. 6 is a forward five speed transmission apparatus using an assist clutch. The main components of the gear transmission are based on the existing manual transmission. A friction clutch is built in the transmission, so that shift performance free of the torque cutoff during the gear shift can be realized.

An input shaft 5 and an engine output shaft 4 are connected/disconnected by an input clutch 3. The input clutch 3 is a general dry single disc clutch. Power generated in an engine 1 is transmitted from a clutch cover (not shown) to a pressure plate (not shown) and is transmitted to a clutch disc (not shown) by frictional force generated by a load pressed by a spring (not shown). Further, the power is transmitted to the input shaft 5 of the gear transmission 2A via a rotation direction buffer mechanism (not shown) of the clutch disc.

1st speed, 2nd speed, 3rd speed, 4th speed and 5th speed driving gears 31, 32, 33, 34, 35 and a reverse driving gear R1 are disposed on the input shaft 5. The driving gears 31, 32 and the reverse driving gear R1 are turned integrally with the input shaft 5. The driving gears 33, 34 , 35 as idle gears are disposed on the input shaft 5 so that they can rotate freely on the input shaft 5. An output shaft 26 and a countershaft 27 are provided in parallel with the input shaft 5. 1st speed to 5th speed driven gears 41, 42, 43, 44, 45 and a reverse third gear R3 are disposed on the output shaft 26. The driven gears 43, 44, 45 and the reverse third gear R3 are arranged so that they rotate integrally with the output shaft 26. The driven gears 41, 42 as idle gears are arranged so that they can rotate freely on the output shaft 26. A second reverse gear R2 is provided to the countershaft 27. The second reverse gear R2 as idle gear is arranged so that it can rotate freely on the countershaft 27. A 3rd/4th speed synchromesh 150 is provided on the input shaft 5. A lst/ 2nd speed synchromesh 160 is provided on the output shaft 26. A reverse synchromesh 140 is provided on the countershaft 27.

The friction clutch 60 is built inside the above-mentioned transmission mechanism based on the manual transmission. A clutch drum 60A is fastened to the 5th speed driving gear 35, and plural driven plates integrally rotate with the clutch drum 60A. A clutch hub (not shown) is fastened on the input shaft 5, and plural driving plates integrally rotate with the clutch hub. The driving plate and the driven plate are a well-known wet multiple disc clutch for transmitting torque by hydraulic shearing force between the plates by axially pressing a clutch piston (not shown) by oil pressure and others. The 5th speed can be made by engaging the friction clutch 60.

The input clutch 3, the friction clutch 60 and the plural synchromeshes 150, 160 are automatically controlled by a control device 100A. An electric control signal output from the control device 100A is input to a hydraulic controller 30. Plural servo solenoid valves are installed in the hydraulic controller 30. Thereby, oil pressure or a flow rate according to a control signal is produced. The engagement/disengagement operation of the input clutch 3 is automatically controlled by controlling a flow rate of a flow control valve installed in the hydraulic controller 30. Besides, the engagement/disengagement operation of the friction clutch 60 is automatically controlled by controlling the oil pressure of a pressure control valve installed in the hydraulic controller 30. A flow rate of liquid coolant (cooling oil) supplied to the friction clutch 60 is controlled by controlling a flow rate of the flow control valve installed in the hydraulic controller 30.

Further, the synchromeshes 140, 150, 160 are selectively slid laterally in FIG. 6 on the respective shafts by controlling the oil pressure of the pressure control valve installed in the hydraulic controller 30 and controlling the balance of oil pressure which acts on each cylinder of a shift actuator 40. Thereby, the driving gear or the driven gear and each shaft are engaged, and a torque transmission path according to a gear shift instruction is selected.

The control device 100A is provided with first and second flow rate computation sections 10, 11 and a flow rate computation switching section 12 as described in relation to FIG. 1.

The gear transmission of this embodiment drives components of the transmission by a hydraulic actuator such as a solenoid and a cylinder, however, the components may be also driven using an electric type actuator such as a motor. Or the following combination may be adopted: the friction clutch 60 is formed by a hydraulic actuator, and the input clutch 3 and the plural synchromeshes are formed by an electric type actuator.

Next, actual gear shift operation will be described. For one example, when a vehicle is started from a stationary state, engagement at the smallest gear ratio of the gear transmission 2A, that is, at time when 1st speed gear ratio is made.

The 1st/2nd speed synchromesh 160 is shifted on the left side in FIG. 6 from a neutral position, engages the first driven gear 41 with the output shaft 26. The input clutch 3 is engaged so that torque is transmitted from the engine 1 to the output shaft 26 via a 1st speed gear train. Next, when vehicle speed increases and the control device 100Adetermines that a condition for requiring an up-shift to 2nd speed is met, the engaging force of the friction clutch 60 is increased. And when engine torque and the engaging force of the friction clutch 60 are balanced, the 1st/2nd speed synchromesh 160 is shifted to the neutral position. The torque of the engine is transmitted to the output shaft 26 via a 5th speed gear train. Next, the 1st/2nd speed synchromesh 160 is shifted on the right side in FIG. 6 from the neutral position, the second driven gear 42 is engaged with the output shaft 26, and a series of shift operation is completed. Thus, a shift free of the cutoff of torque is executed.

In the gear transmission of this embodiment, when the friction clutch 60 is engaged in the same way as the above mentioned twin-clutch transmission, the rapid increase of torque is also transmitted via the friction clutch by an applied load. Thereby, heat is caused due to the friction caused in the clutch. Therefore, it is required that a coolant flow rate is supplied to the friction clutch 60 to inhibit the heat generation.

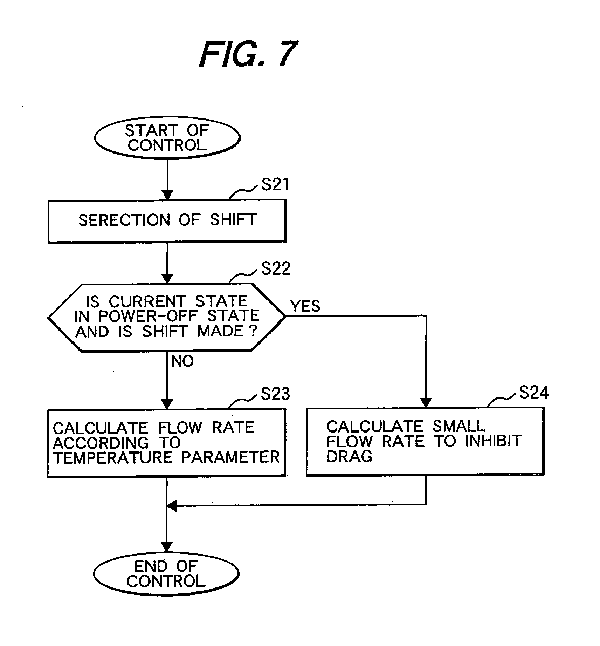

Next, referring to FIG. 7, the operation of the control device 100A will be described.

FIG. 7 is a flowchart showing the operation of the control apparatus.

In a step S21, the control device 100A determines a type of a gear shift (for example, from 1st speed to 2nd speed, from 4th speed to 3rd speed and others) based on sensor information such as an angle of an accelerator and output shaft revolution speed.

Next, in a step S22 , the flow rate computation switching section 12 of the control device 100A determines whether or not the current state is a power-off state in which the engine is reversely driven from the output shaft, based on a sensor information such as an angle of an accelerator and the result of operation such as the temporal variation of output shaft revolution speed. Simultaneously, the switching section 12 determines whether or not a gear shift is made, based on the positional information of the synchromesh and others. When the flow rate computation switching section 12 determines that the current state is the power-off state and the gear shift is made, the step S22 proceeds to a step S24. On the other hand, when the current state is not the power-off state and no gear shift is made, the step S22 proceeds to a step S23.

When the current state is the power-off state and no gear shift is made, the first flow rate computation section 11 makes cooling action precede in the step S23, calculates a coolant flow rate according to a temperature parameter such as the quantity of heat caused by the friction clutch 60. Thereby, the cooling action of the friction clutch 60 is positively accelerated.

On the other hand, when the flowrate calculation-switching section determines that the current state is the power-off state and a gear shift is made, the second flow rate computation section 10 makes the inhibition of drag precede, and calculates a small quantity of coolant flow rate (including zero) in the step S24 independent of a temperature parameter such as the quantity of heat generation caused by the friction clutch 60. Thereby a series of process is completed.

The selection of kind of a gear shift in the step S21 may be also automatically determined by the control device 100A, and may be also determined according to information from a lever and a switch provided to a driver's or a rider's seat.

As described above, the embodiment makes possible to avoid the deterioration of a response caused due to the increase of a clutch- coolant flow rate for cooling the clutch, during a power-off and gear shift, by the control device 100A.

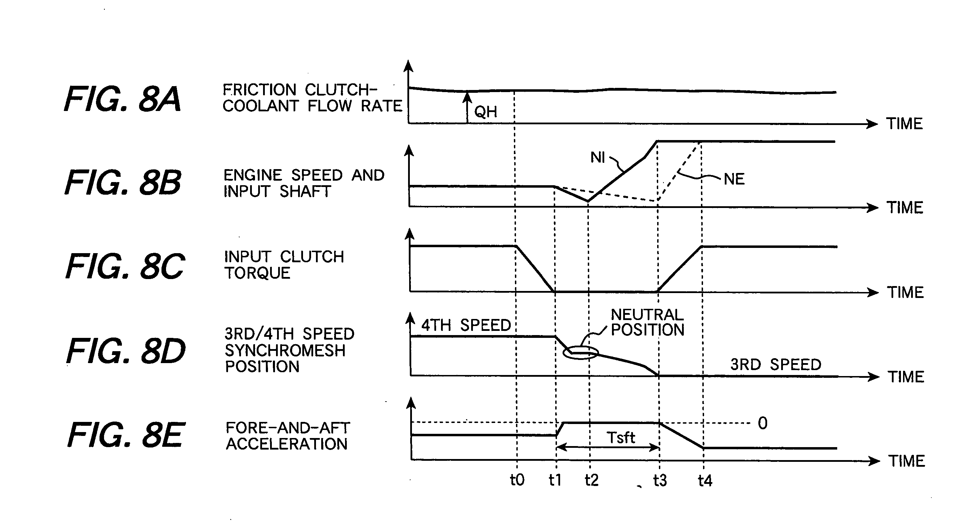

Referring to FIGS. 8A to 8E, a problem in gear shift operation in a power-off state for example in a situation in which the temperature of the friction clutch 60 is high and a large quantity of coolant is supplied to the friction clutch will be described below.

FIGS. 8A to 8E are time charts showing power-off and gear shift operation from 4th speed to 3rd speed in a conventional method. FIG. 8A shows a coolant flow rate for the friction clutch, FIG. 8B shows engine speed NE and input shaft revolution speed NI of the transmission, and FIG. 8C shows input clutch torque. FIG. 8D shows a position of the 3rd/4th speed synchromesh, and FIG. 8E shows fore-and aft vehicle acceleration.

The power-off shift means a gear shift in a situation where the engine 1 is reversely driven from the output shaft 26, in other words, a so-called engine brake acts. As described above, the gear transmission 2A of this embodiment can realize a shift free of the cutoff of torque by using the friction clutch 60. However, in the case of the power-off shift, if anything, it is known that a satisfactory shift feeling is realized by temporarily disengaging the input clutch 3 and executing a shift operation with the cutoff of torque.

When a request for the power-off shift from 4th speed to 3rd speed is issued at time t0 shown in FIG. 8E, the torque of the input clutch 3 is first reduced as shown in FIG. 8C and the engaged clutch is disengaged.

When it is determined that the input clutch 3 is disengaged at time t1, the 3rd/4th speed synchromesh 150 is driven as shown in FIG. 8D and is shifted from a 4th speed position to a neutral position. At this time, as a large quantity of coolant QH is supplied to the friction clutch 60 as shown in FIG. 8A, drag in the friction clutch increases and as shown in FIG. 8B, the revolution speed NI of the input shaft 5 is reduced from revolution speed equivalent to 4th speed to revolution speed equivalent to 5th speed.

Next, the 3rd/4th speed synchromesh 120 is shifted from a neutral position to a 3rd-speed position at time t2 as shown in FIG. 8D, and the input shaft revolution speed NI is raised as shown in FIG. 8B to be synchronized with revolution speed equivalent to 3rd speed. However, as the drag of the friction clutch 60 acts as a load, time required for the synchronization of revolution is extended.

When it is determined that the shift to the 3rd speed position of the 3rd/4th speed synchromesh 120 is completed at time t3 as shown in FIG. 8D, acceleration in a negative direction is generated in a state where torque is cut off by engaging the input clutch 3 again as shown in FIG. 8C. Thereby a series of shift operation is finished. That is, when a large quantity of coolant is supplied, the following problem occurs: time Tsft of the cutoff of torque in the power-off shift is extended and a response of the shift is deteriorated.

Next, referring to FIGS. 9A to 9E, the operation of the control device 100A of this embodiment will be described.

FIGS. 9A to 9E are time charts showing power-off shift operation from 4th speed to 3rd speed by using the control device of the second embodiment of the invention. Vertical lines shown in FIGS. 9A to 9E are similar to those in FIGS. 8A to 8E.

When a request for the power-off shift from 4th speed to 3rd speed is issued at time t0 , the torque of the input clutch 3 is first reduced as shown in FIG. 9C, and the engaged input clutch 3 is disengaged. Simultaneously, as shown in FIG. 9A, the coolant flow rate supplied to the friction clutch 60 is reduced to zero.

Next, when it is determined that the clutch 3 is disengaged at time t1, the 3rd/4th speed synchromesh 120 is driven as shown in FIG. 9D, and is shifted from a 4th speed position to the neutral position. As a coolant flow rate for cooling the friction clutch 60 to which a shift instruction is issued, is zero and drag in the friction clutch decreases, the remarkable deterioration shown in FIG. 8B of the input shaft revolution speed NI is not caused.

Next, when the 3rd/4th speed synchromesh 120 is shifted from the neutral position to the 3rd speed position at time t2 as shown in FIG. 9D, the input shaft revolution speed NI promptly rises as shown in FIG. 9B and as the input shaft revolution speed is synchronized with revolution speed equivalent to 3rd speed, torque cutoff time Tsft is not extended.

When it is determined that the shift to the 3rd speed position of the 3rd/4th speed synchromesh 120 is completed at time t3, the input clutch 3 is engaged again as shown in FIG. 9C. And a friction clutch-coolant flow rate is also raised again as shown in FIG. 9A, an initial flow rate is supplied, and action for cooling the friction clutch is accelerated. Therefore, the torque cutoff time Tsft is not extended, and a response of a shift is also not deteriorated. The input clutch 3 is completely engaged at time t4 and a series of shift operation is completed.

As described above, according to this embodiment, it is possible to avoid the deterioration of a response of a shift in the power-off shift caused by the increase of the coolant flow rate for cooling the clutch.

In FIG. 9A, the friction clutch-coolant flow rate is temporarily reduced to zero during the shift, however, a control method of supplying a flow rate equal to or smaller than a predetermined value in which no detrimental effect is caused due to drag may be also adopted.

The control method described in this embodiment can be also applied to a twin-clutch system which is the gear transmission of the first embodiment. In the twin-clutch system, when a large quantity of coolant is supplied to a first clutch 3A or to a second clutch 3B during the power-off shift, drag in the clutch increases. Therefore, the revolution speed of a first input shaft 5A or a second input shaft 5B is dragged with engine speed. As a result, even when the synchromesh is driven to execute the predetermined shift, its synchronization operation is obstructed. Consequently, torque cutoff time is extended and a response of the shift is deteriorated. Therefore, in the twin-clutch transmission, if temporarily reducing the coolant flow rate for the clutch in the power-off shift, it is possible similarly to avoid the deterioration of a response of a shift.

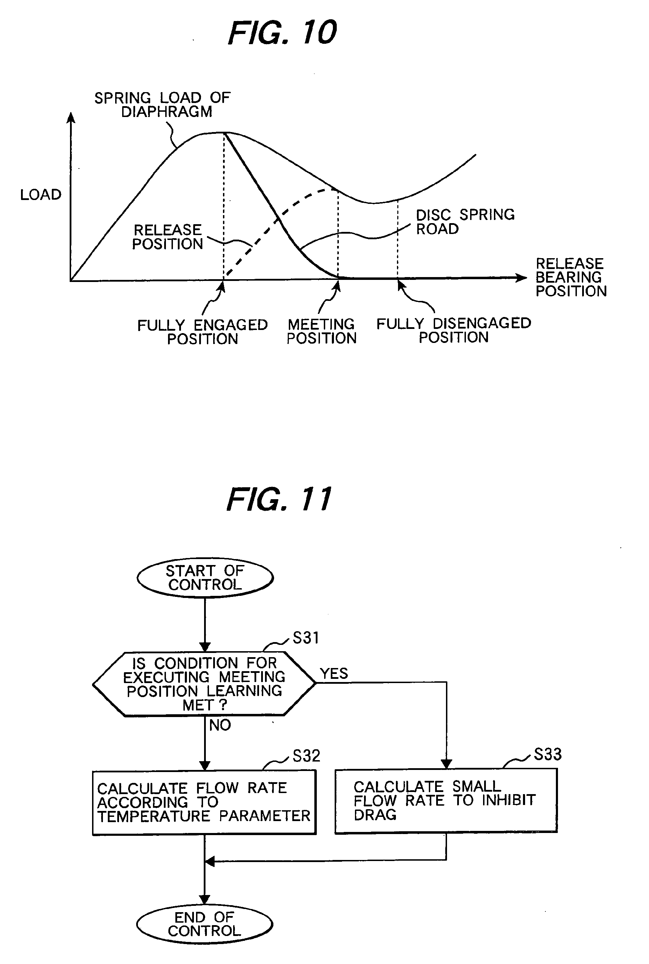

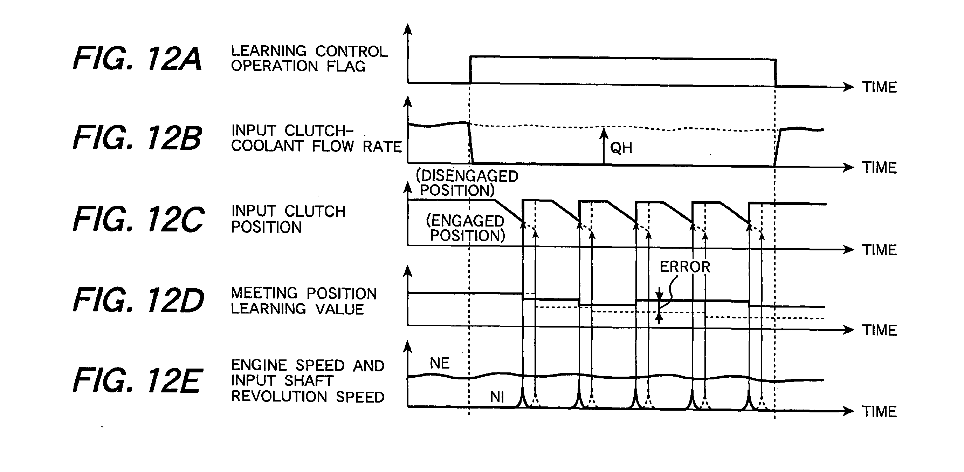

Next, referring to FIGS. 10 to 12A, 12B, 12C, 12D and 12E, a control device and a control method of a gear transmission of a third embodiment of the invention will be described. The configuration of the gear transmission is similar to that shown in FIG. 6.

First, referring to FIG. 10, a release load characteristic of a dry single disc clutch used for an input clutch 3 of the gear transmission of this embodiment will be described.

FIG. 10 shows a release load characteristic of the dry single disc clutch used for the input clutch of the gear transmission of the third embodiment.

The dry single disc clutch is set in a position (in a fully engaged position) where a load of a diaphragm spring and a load of a clutch disc spring are balanced. When control force onto the clutch, that is, a release load is increased, a release bearing is pushed in, a pressing load onto a clutch disc decreases. The clutch is connected to the input shaft 5 via splines so that the clutch disc can be slid. By decreasing the pressing load onto the clutch, the clutch is disengaged. In the meantime, when control force onto the clutch, that is, the release load is reduced, a position of the release bearing is pushed back by the spring reaction of a diaphragm and the clutch is engaged.

As the input clutch 3 composed of the dry single disc clutch has the above-mentioned characteristic, when torque transmitted by the clutch, namely, the pressing load onto the disc spring is automatically controlled by a control device 100A, the following control is executed as shown in FIG. 10. That is, storing correlation (a clutch cushion characteristic) between the position of the release bearing and the pressing load of the disc spring beforehand as data as shown in FIG. 10; sensing the position of the release bearing; and controlling the position. The cushion characteristic changes depending upon difference every clutch, an assembly error in manufacture or the abrasion of the clutch disc. Therefore, it is known the following meeting position learning method: detecting a FIG. 10 shown-position (a meeting position) where torque transmission is started; and correcting the cushion characteristic by updating a history of the variation as to the detected meeting position.

However, there is a problem that a detrimental effect given to the result of the learning of the input clutch 3-meeting position is made depending on a coolant flow rate supplied to a friction clutch 60 in the gear transmission 2A. A method of solving the problem by this embodiment will be described below.

Referring to FIGS. 11 and 12, the operation of the control device 100A of the gear transmission of the third embodiment of will be described below.

FIG. 11 is a flowchart showing a main part of the operation of the control device for the gear transmission of the third embodiment. FIGS. 12A to 12E are time charts showing the main part of the control operation of the control device.

In a step S31 shown in FIG. 11, flow rate computation switching section 12 determines whether a condition for executing the meeting position learning for correcting the cushion characteristic is met or not based on information such as a braking switch, a vehicular stopped condition, engine speed and a gear position. When the condition is met, the step S31 proceeds to a step S33. When the condition is not met, the step S31 proceeds to a step S32.

When the condition for executing the meeting position learning is not met, first flow rate computation section 11 makes cooling action precede in the step S32, calculates a coolant flow rate according to a temperature parameter such as the quantity of heat caused by the friction clutch 60, and positively accelerates the cooling action.

In the meantime, when the condition for executing the meeting position learning is met, second flow rate computation section 10 calculates a small flow late of coolant flow rate in a step 33. The small flow rate calculation is executed independent of a temperature parameter such as the quantity of heat caused by the friction clutch 60 to prevent a detrimental effect on the meeting position learning due to the drag of the friction clutch 60. Thus, a series of process is finished.

As described above, a detrimental effect, which is caused by the increase of the coolant flow rate for the friction clutch, on the meeting position learning of the dry single disc clutch can be prevented by controlling coolant flow rate with the control device 100A.

Next, referring to FIGS. 12A to 12E, the meeting position learning operation of the input clutch 3 will be described. FIG. 12A shows a learning control operation flag, FIG. 12B shows an input clutch-coolant flow rate, and FIG. 12C shows a position of the input clutch. FIG. 12D shows a meeting position learning value and FIG. 12E shows engine speed NE and the input shaft revolution speed NI of the transmission.

When a condition for starting the meeting position learning for correcting the cushion characteristic is met based on information such as a braking switch, a state in which the vehicle is stopped, engine speed and a position of a gear at time t0, the learning control operation flag is set as shown in FIG. 12A.

In the meeting position learning, each synchromesh of the gear transmission 2A is located at a neutral position, and the input clutch 3 is slowly engaged from a disengaged position as shown in FIG. 12C. When the clutch reaches a position where torque transmission is started, the input shaft revolution speed NI rapidly increases toward engine speed NE of an idle state. That is, the increase of the input shaft revolution speed NI is sensed, the meeting position of the input clutch 3 is detected, and the cushion characteristic of the clutch is corrected.

As drag increases when a large quantity QH of coolant is supplied to the input clutch 3 as shown by a broken line in FIG. 12B, the drag acts as a load onto the increase of the input shaft revolution speed. As a result, the input shaft revolution speed does not rise until the input clutch reaches a position on the engaged side from the initial meeting position. As a result, the meeting position is learned by mistake, and satisfactory performance cannot be realized in a shift and a start. In the meantime, in a period where the learning control operation flag is set as shown by a full line in FIG. 12B, the computation (calculating) of the flow rate of the coolant supplied to the input clutch 3 is switched, and the coolant flow rate is temporarily reduced to zero. Thereby, drag in the input clutch 3 is reduced, the meeting position is precisely detected, and the cushion characteristic is precisely corrected.

As described above, according to this embodiment, the deterioration, which is caused by the increase of the coolant flow rate for the clutch, of a response in the power-off shift can be inhibited.

In FIG. 12B, in the meeting position learning, the coolant flow rate for the input clutch is temporarily reduced to zero, however, a control method of supplying the coolant flow rate equal to or smaller than a predetermined value at which a detrimental effect due to drag is not caused may be also adopted.

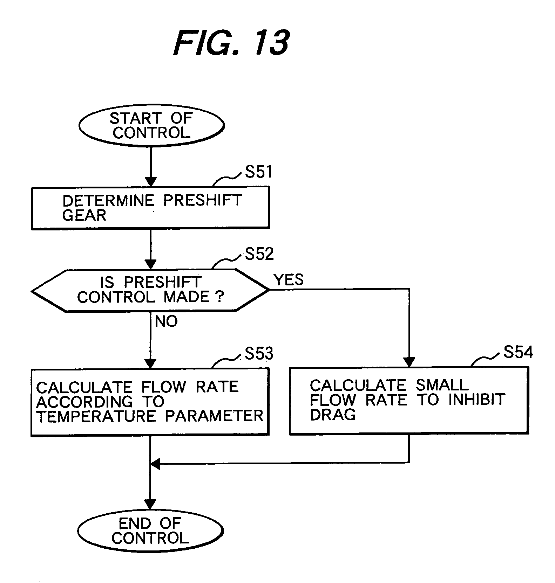

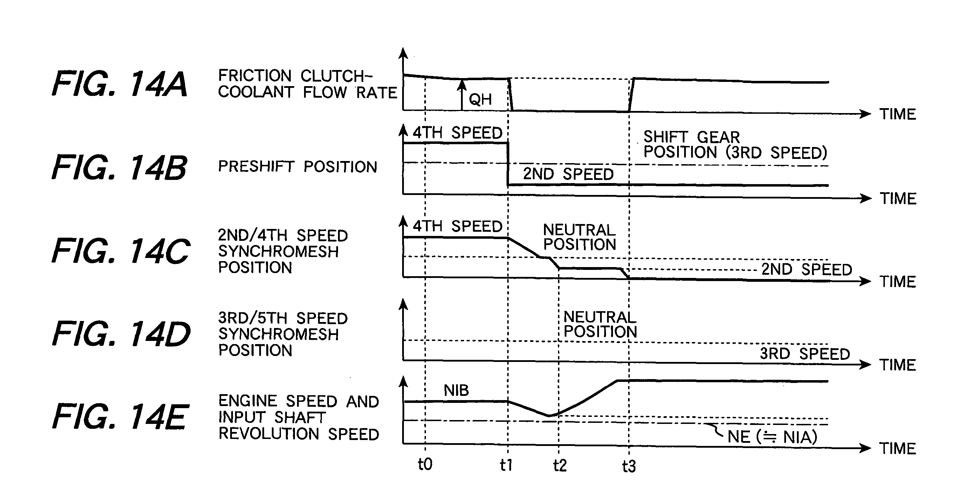

Next, referring to FIGS. 13 and 14A, 14B, 14C, 14D and 14E, a control device and a control method of a gear transmission of a fourth embodiment of the present invention will be described. The configuration of the gear transmission is similar to that shown in FIG. 3.

FIG. 13 is a flowchart showing the control operation of the control apparatus of the gear transmission. FIGS. 14A to 14E are time charts showing a main part of the operation of the control device of the gear transmission of the fourth embodiment.

In the twin-clutch system shown in FIG. 3, "pre-shift control" where the synchromesh coupled to the clutch in an inactive state is engaged with the predetermined gear at a preceding stage of shift operation. Thereby a predetermined shift is made, and shift operation is on standby is performed. In the pre-shift control, as the next gear shift position is estimated and gear switching operation is completed beforehand, only the engagement of the clutch is switched in actual shift operation. Thereby, the time required for the shift operation can be reduced. However, when a coolant flow rate is excessively supplied to the inactive clutch, the time required for the engagement of the synchromesh is extended due to the drag of the clutch. Or a problem that the engagement of the synchromesh is not completed and preshift operation is not completed occurs. Therefore, the flow rate of the coolant supplied to the inactive clutch is required to be controlled in coordination with preshift operation. When control operation for switching gears including the preshift operation and control for reducing a coolant flow rate are simultaneously executed, the following response lag is caused. The response lag is the one since an instructed value of a coolant flow rate is changed until a coolant flow rate actually supplied to the clutch decreases. The response lag is remarkable when oil temperature of the coolant (cooling oil) is low. In such a condition, gears are switched in a state where drag is caused, and gear noise may be occurred by the response lag. Then, in this embodiment, a coolant flow rate is reduced prior to an actual gear change.

FIG. 13 is a flowchart showing cooperative control between a series of gear change operation in preshift control and coolant flow rate control.

First, in a step S51, a pair of gears, which is decided by the above-mentioned preshift control operated by the control device 100, are selected.

Next, inastepS52, flow rate computation switching section 12 determines whether a clutch coupled to the gear selected in the step S51 is disengaged or not. When it is determined that the clutch is disengaged, the step S52 proceeds to a step S53. When the clutch is not disengaged, the step proceeds to a step S54.

When the clutch coupled to the selected gear is not disengaged, the first flow rate computation section 11 places importance on a cooling action for the clutch in the step S53, calculates a coolant flow rate according to a temperature parameter such as the quantity of heat caused in a friction clutch 60. Thereby, the cooling action of the friction clutch 60 is positively accelerated.

In the meantime, when the clutch coupled to the selected gear is disengaged, second flow rate computation section 10 places importance on the inhibition of drag and calculates a small quantity (including zero) of coolant flow rate independent of a temperature parameter such as the quantity of heat caused in the friction clutch 60 in the step S54.

When the control process has proceeded to the step S54 , next control process proceeds to a step S55, and timer used for reduction control of the coolant flow rate is incremented.

Next, in a step S56, it is determined whether a predetermined time preset by the coolant flow rate reduction timer is exceeded or not.

When time counted by the timer used for the coolant flow rate reduction control exceeds the predetermined time, it is determined in a step S57 that the coolant flow rate actually supplied to the clutch is sufficiently reduced. And then gear change operation for forming the pre-shift gear is executed, and a series of process flow is completed.

According to this embodiment, in the pre-shift control, as gear shift (gear change) operation is performed in consideration of a response lag due to reduction control of the coolant flow rate, it is possible to inhibit a detrimental effect exerted on gear shift operation by the coolant flow rate.

Next, referring to FIGS. 14A to 14E , the cooperative control of the gear shift operation and coolant flow rate switching operation will be described. FIGS. 14A to 14E are time charts showing operation when a request for preshift from 4th speed to 2nd speed is made in 3rd-speed steady driving.

FIG. 14A shows the coolant flow rate of a clutch B, FIG. 14B shows a target pre-shift gear position, and FIG. 14C shows a position of the 2nd/4th speed synchromesh. FIG. 14D shows a position of the 3rd/5th speed synchromesh and FIG. 14E shows engine speed NE (the revolution speed NIA of the clutch input shaft A) and the revolution speed NIB of the clutch input shaft B.

At time t0 , the 3rd speed gear is selected in a shift position, and a 4th speed gear is selected as a target pre-shift gear position. Therefore, the 3rd/5th speed synchromesh coupled to the clutch A is located at a 3rd speed engagement position (as shown in FIG. 14D). In the meantime, the 2nd/4th speed synchromesh coupled to the clutch B is located at a 4th-speed engagement position (as shown in FIG. 14C). As the clutch A is engaged and the clutch B is disengaged, the revolution speed NIA of the input shaft A is similar to engine speed NE and the revolution speed of the input shaft B is equivalent to 4th speed. That is, the current state is a 3rd-speed steady driving state where the power of an engine is transmitted from the clutch A to an output shaft via the 3rd speed gear.

Here, when the next gear position to be shifted is estimated as shift mode from 4th speed to 2nd speed at time t1, that is, the next shifted gear position is estimated as the 2nd speed position, the target pre-shift gear position is switched from the 4th speed position to the 2nd speed position as shown in FIG. 14B. Further, as shown in FIG. 14A, the clutch B coolant flow rate is reduced.

Next, as actual gear change operation is executed when it is determined at time t2 that predetermined time elapses since the clutch B-coolant flow rate is reduced, the 2nd/4th synchromesh is disengaged from the 4th speed engagement position to a neutral position as shown in FIG. 14C and as shown in FIG. 14E, the revolution speed of the input shaft B decreases.

Next, at time t3, the 2nd/4th speed synchromesh stands still in the vicinity of a 2nd speed balk position and as shown in FIG. 14E, the revolution speed of the input shaft B is synchronized with revolution speed equivalent to 2nd speed.

When the revolution speed of the input shaft B is equivalent to 2nd speed-revolution speed at time t3, the 2nd/4th speed synchromesh can be shifted to the 2nd speed engagement position. Thus the pre-shift operation is completed. Preparation for a shift to the 2nd speed gear is completed and afterward, the 3rd speed steady driving also continues.

When a large quantity of coolant is supplied to the clutch B during gear change operation from at time 2 until at time t4, the revolution speed of the input shaft B is maintained at speed equivalent to engine speed due to the drag of the clutch B as shown by a broken line in FIG. 14E. As a result, the 2nd/4th synchromesh cannot be shifted from the 2nd speed balk position and preshift operation cannot be completed.

When gear change operation is executed immediately after the reduction of the coolant flow rate is started at the time t1, gear noise may occur due to the drag of the clutch because operation for disengaging a gear is executed in a state where an actual coolant flow rate is not sufficiently reduced.

However, in this embodiment, as shown in FIG. 14A, standby time since a coolant flow rate is reduced until actual gear shift operation is started is set.

As described above, since gear shift (gear change) operation is performed in consideration of a response lag due to reduction control of the coolant flow rate, it is possible to inhibit a detrimental effect exerted on gear shift operation by the coolant flow rate.

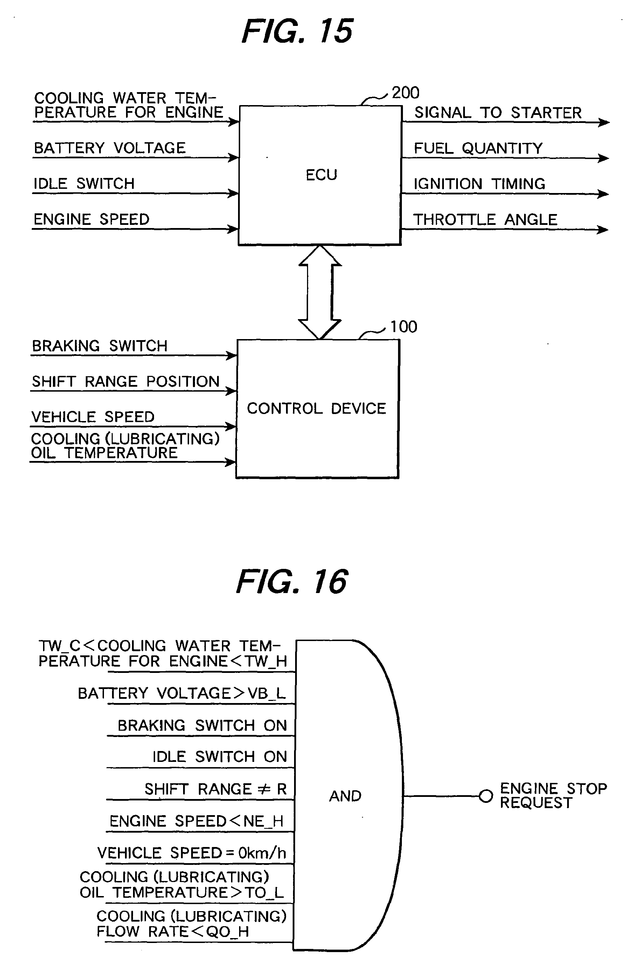

Next, referring to FIGS. 15 and 16, a control apparatus and a control method of a gear transmission of a fifth embodiment of the invention will be described.

FIG. 15 is a system block diagram showing the configuration of an idle stop system of the fifth embodiment of the invention. FIG. 16 is a logic diagram showing control operation over the idle stop system of the fifth embodiment.

Generally, in the idle stop system, it is determined whether an engine is automatically stopped or restarted based on input information from various sensors or not. The engine is controlled based on the information as to a starter, the quantity of fuel, ignition timing and a throttle angle. As shown in FIG. 15, an engine control unit (ECU) 200 for controlling the engine is connected to the control device 100 of the gear transmission 2 by two-way communication and executes the operation of an idle stop in consideration of a state of the gear transmission.

The engine control unit 200 permits an idle stop according to logical conditions shown in FIG. 16 and outputs a signal for automatically stopping the engine. In a conventional type idle stop system, when the temperature of lubricating oil in a gear transmission is low in addition to conditions of braking operation by a driver or a rider and sensor information such as vehicle speed, the idle stop is prohibited. This is because the viscosity of the lubricating oil is high when the temperature of the lubricating oil is low and the performance of a start after a restart is not secured. That is, only when the temperature of the lubricating oil is equal to or higher than predetermined temperature, an idle stop is permitted. However, on such a conventional type condition where the idle stop is permitted, the idle stop is permitted in a situation that a friction clutch generates heat and a large quantity of coolant is supplied to the friction clutch as described in relation to the example shown in FIG. 1. Therefore, the deterioration of drivability when the engine is stopped or when the engine is started in idle stop operation cannot be avoided.

Then, in this embodiment, as shown in FIG. 16, the gear transmission control device performs the computation of the coolant flow rate for the clutch based on the temperature parameter such as a thermal load of the friction clutch. And then, the engine control unit 200 receives a result of the flow late computation from the control device 100 by communication, and permits the idle stop only when its value is smaller than a preset upper limit value QO_H. That is, in the situation that a large quantity of coolant is supplied to the friction clutch, the idle stop is prohibited to place importance on a cooling action for the clutch.

As for other conditions on which the idle stop is permitted, the temperature of cooling water for the engine should be higher than the predetermined temperature TW_C and should be lower than the predetermined temperature TW_H, the battery voltage should be higher than the predetermined voltage VB_L, a braking switch should be turned on, an idle switch should be turned on, a shift range should be except a reverse position R, engine speed should be lower than the predetermined engine speed NE_H, vehicle speed should be 0 km/h, the temperature of liquid coolant for the clutch should be higher than the predetermined temperature TO_L, and when the above-mentioned conditions and a condition that the coolant flow rate for the clutch is smaller than a predetermined flow rate value QO_H are all met, an idle stop is permitted. A condition on which an idle stop is permitted is not limited to these conditions and a part of these conditions may be also omitted. This embodiment is characterized in that a condition on which the coolant flow rate for the clutch is smaller than the predetermined flow rate value QO_H is included in conditions on which an idle stop is permitted.

According to this embodiment, the deterioration of drivability caused by the increase of a flow rate for cooling the friction clutch when the engine is stopped or when the engine is started in idle stop operation, can be avoided.

The above embodiments and features can be combined in any way partly or as a whole.

## Claims

1. A control device (100) of a gear transmission (2) for changing shift ratio by the engagement/disengagement of at least one friction clutch (3) in the gear transmission (2) coupled to an engine (1), and controlling the flow rate of a coolant supplied to the friction clutch (3) by operating a coolant flow controller (9, 30), which controls the coolant for cooling or lubricating the friction clutch, and the control device (100) comprising:
a first flow rate computation section (11) for calculating a coolant flow rate which places importance on a cooling action for the friction clutch;
a second flow rate computation section (10) for calculating a coolant flow rate which places importance on an inhibition of drag in the friction clutch; and
a flow rate computation switching section (12) for switching the first flow rate computation section (11) and the second flow rate computation section (10); wherein
the coolant flow controller (9, 30) controls the coolant flow rate based on output from the first or second flow rate computation section (11, 10).

2. The control device of the gear transmission according to Claim 1,-wherein
the first flow rate computation section (11) calculates the coolant flow rate based on a temperature parameter such as the quantity of heat caused in the friction clutch (3).

3. The control device of the gear transmission according to Claim 1 or 2, wherein
the flow rate computation switching section (12) switches to the second flow rate computation section (10) when an engine stop request is made.

4. The control device of the gear transmission according to at least one of Claims 1 to 3, wherein
the flow rate computation switching section (12) switches to the second flow rate computation section (10) when an engine start request is made.

5. The control device of the gear transmission according to at least one of Claims 1 to 4, wherein
the flow rate computation switching section (12) switches to the second flow rate computation section (10) when a shift request of the gear transmission (2) is made.

6. The control device of the gear transmission according to at least one of Claims 1 to 5 , wherein
the gear transmission (2) is a twin-clutch system provided with two friction clutches, and
the flow rate computation switching section (12) switches from the first flow rate computation section to the second flow rate computation section (10) prior to shift operation of the gear transmission (2).

7. A control device of a gear transmission provided with one or more friction clutches for changing shift ratio by the engagement/disengagement of the friction clutch (3), comprising:
a first flow rate computation section (11) for calculating a coolant flow rate which places importance on a cooling action for the friction clutch (3);
a second flow rate computation section (10) for calculating a less coolant flow rate than a flow rate calculated by the first flow rate computation section (11); and
a coolant flow controller (9, 30) for controlling a coolant supplied to the friction clutch (3) based on a coolant flow rate calculated by either the first flow rate computation section (11) or the second flow rate computation section (10).

8. The control device of the gear transmission according to Claim 7, wherein
the flow rate calculated by the second flow rate computation section (10) is zero.

9. A control device of a gear transmission provided with one or more friction clutches for changing shift ratio by the engagement/disengagement of the friction clutch (3), comprising:
a switching section for switching from a first coolant flow rate which places importance on action for cooling the friction clutch (3) to a second coolant flow rate which places importance on an inhibition of drag, and thereby changing a coolant flow rate supplied to the friction clutch (3).

10. A control system of a vehicle comprising an engine (1) for vehicle, a gear transmission (2) for changing shift ratio by the engagement/disengagement of at least one friction clutch (3), and coolant flow controller (9, 30) for controlling a coolant flow rate for cooling or lubricating the friction clutch (3), and in which the engine (1) can be automatically turned into a driven state and into a stopped state based on a predetermined condition, the system further comprising:
a flow rate determining section for determining the coolant flow rate; and
a control section for prohibiting the automatic stop of the engine (1) based on the result of determination by the coolant flow rate determining section when the coolant flow rate is small.

11. A control method of a gear transmission for changing shift ratio by the engagement/disengagement of at least one friction clutch (3) in the gear transmission (2) coupled to an engine (1), controlling a flow rate of a coolant for cooling or lubricating the friction clutch (3), and then changing a coolant flow rate supplied to the friction clutch (3), the method comprising steps of:
when required, switching from a first coolant flow rate which places importance on action for cooling the friction clutch to a second coolant flow rate which places importance on an inhibition of drag, and thereby changing a coolant flow rate supplied to the friction clutch (3).
